# EUROPÄISCHE PATENTANMELDUNG

(11) **EP 1 241 603 A1**
(43) Veröffentlichungstag der Anmeldung: **18.09.2002**
(21) Anmeldenummer: 01106566.1
(22) Anmeldetag: 15.03.2001
(51) Int. Cl.: G06F 17/60

(54) **Internet-Banner**

(71) Anmelder: Tizzano, Michael, 70178 Stuttgart (DE)
(72) Erfinder: Tizzano, Michael, 70178 Stuttgart (DE)
(74) Vertreter: Rupp, Christian, Dipl.Phys.

(57) **Zusammenfassung**

Bei Verwendung von Technologien gemäß dem Stand der Technik war es bislang ausschließlich möglich, Internet-Werbebanner mit statischem Inhalt auf Seiten von Internet-Auftritten zu plazieren. Sollte ein Werbebanner bei einem erneutem Aufruf durch den Nutzer eines Internet-Terminals veränderte Inhalte anzeigen, so war es bisher nötig, den gesamten Werbebanner zu tauschen. Nunmehr wird es ermöglicht, zusätzlich oder alternativ beliebige Nutzinhalte auf Werbebannern anzuzeigen, die in Echtzeit via eines Redaktionssystems manuell verändert werden können oder aber insbesondere vollautomatisch maschinell aktualisiert oder getauscht werden können. Dazu weist eine Bannerinformations-Datenbank (2) verschiedene interne Datenbankstrukturen (26, 27, 28) auf, die zumindest teilweise bezüglich ihres Nutzdatengehalts manuell oder automatisch aktualisiert werden können. Somit kann sich die entsprechende Bannerinformation entsprechend der Aktualisierung der Nutzdatenbankstrukturen (3) bei jedem erneuten Zugriff auf eine Website (13) oder aber automatisch verändern.

## Beschreibung

Die vorliegende Erfindung bezieht sich auf ein Verfahren zur Wiedergabe von Informationen auf einem Ausschnitt einer Anzeigefläche eines Terminals eines Datennetzes wie beispielsweise dem Internet, auf ein Computersoftwareprogramm-Produkt, das in dem auf einem Rechner in einer Netzwerkumgebung geladenen Zustand ein solches Verfahren implementiert, auf ein System zur Wiedergabe von Informationen auf einem Ausschnitt einer Anzeigefläche eines Terminals sowie auf eine Bannerinformations-Datenbank in einer Netzwerkumgebung zur Bereitstellung von Bannerinformationen.

Der allgemeine Hintergrund der vorliegenden Erfindung sind sogenannte Internet-Werbebanner, die gemäß dem Stand der Technik beim Aufrufen von Websites im Internet ausgehend von einem an das Internet angeschlossenen Terminal in einem Ausschnitt einer Anzeigefläche des Terminals angezeigt werden.

Banner im engeren Sinne sind also grafisch gestaltete (Werbe-)Flächen im Internet, die auf einer Website plaziert sind und ggf. einen direkten Link (Verknüpfung von HTML-Dokumenten) zur Site des Werbetreibenden haben. Banner können aber auch rein zur Darstellung von Logos oder Werbebotschaften verwendet werden.

Gemäß dem Stand der Technik weisen diese Werbebanner einen im wesentlichen statischen Inhalt auf. Mit anderen Worten, wenn gemäß dem Stand der Technik die Werbebanneranzeige auf der Anzeigefläche des Terminals bei wiederholtem Anwählen der Adresse einer Website im Internet veränderbare Inhalte anzeigen soll, muss das gesamte Werbebanner, das meist in der Form einer Grafikdatei angelegt ist, getauscht werden. Diese Grafikdateien von Internet-Werbebannern können als Datenbankobjekte in einer Datenbankstruktur oder aber als Dateien auf einem Webserver abgelegt werden.

Bekannt ist weiterhin die sogenannte Banner-Rotationstechnik, bei der die Anzeige der einzelnen Banner regelmäßig wechselt, während der Website-Besucher die geladene Website betrachtet. Die Banner werden also ausgetauscht, während die Seite bereits in einen Browser geladen ist.

Aus US-A-5,572,643 ist eine Technologie bekannt, die einen Webbrowser beinhaltet, der die Anzeige von Informationsobjekten während eines Download-Vorgangs über das Internet ermöglicht. Die während des Download-Vorgangs dynamisch angezeigten Informationsobjekte können beispielsweise Werbung oder andere Nachrichten wie zum Beispiel Verweise auf das Urheberrecht sein.

Aus der US-A-6,157,946 ist eine Technik bekannt, bei der ein Terminal auf eine Website des Internets zugreifen kann. Sobald eine solche logische Verbindung zwischen dem Terminal und dem Internet aufgebaut ist, wird das Terminal identifiziert und eine entsprechende Nutzerinformation wird an eine Datenbank übermittelt, die dann abhängig von der übermittelten Nutzerinformation Nachrichten (Werbung, etc.) zu dem Terminal hin überträgt und in der Art eines Banners in einem zweiten Fenster auf dem Bildschirm des Terminals wiedergibt.

Aufgabe der vorliegenden Erfindung ist es nunmehr, eine Technologie bereitzustellen, die unter Berücksichtigung der Randbedingungen einer verbindungslosen Datennetzumgebung eine Dynamisierung des Inhalts von Bannerinformationen beim Zugriff auf eine Ressource ermöglicht. Insbesondere soll die Bannerinformation in einfacher Weise konfigurierbar und aktualisierbar sein.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Erfindungsgemäß wird also ein Verfahren zur Anzeige von Bannerinformation auf einem an ein Datennetz angeschlossenen Computer vorgeschlagen. Dabei wird zuerst ausgehend von dem Computer eine Adresse einer ersten Ressource des Datennetzes angewählt. Informationen werden von dieser ersten Ressource zu dem Computer über das Datennetz heruntergeladen, wobei die Informationen (wenigstens) einen Verweis auf die Adresse einer weiteren Ressource des Datennetzes enthalten. Dadurch kann automatisch eine Verbindung von dem Computer zu der weiteren Ressource aufgebaut werden und Bannerinformation von der weiteren Ressource zu dem Computer über das Datennetz heruntergeladen und an dem Computer angezeigt werden. Dabei weist die in der weiteren Ressource zum Herunterladen bereitgestellte Bannerinformation sogenannte dynamische Informationen auf, die dadurch gekennzeichnet sind, dass sie in der weiteren Ressource ständig oder in im wesentlichen gleichmäßigen zeitlichen Absänden aktualisiert werden.

In der weiteren Ressource können auch statische Informationen und im wesentlichen dynamische Informationen zu der Bannerinformation zusammengesetzt werden.

Die dynamischen Informationen der Bannerinformation können ständig oder in im wesentlichen gleichmäßigen zeitlichen Abständen wiederholt von der weiteren Ressource zu dem Computer heruntergeladen werden. Dadurch wird die Anzeige der Bannerinformation auf dem Computer ständig aktualisiert und somit auch dynamisiert.

Die dynamischen Informationen können in der weiteren Ressource kategorisiert abgelegt sein.

In der weiteren Ressource können Kategorieinformationen bezüglich des Informationsgehalts derjenigen ersten Ressourcen abgelegt sein, die einen Verweis zum Herunterladen von Bannerinformation von der weiteren Ressource eingebunden aufweisen.

In der weiteren Ressource können dynamische Informationen verschiedener Kategorien vorgesehen sein. Die zu dem Computer übertragene dynamische Information der Bannerinformation kann von dem Informationsgehalt derjenigen ersten Ressource abhängen, die der Computer ursprünglich angewählt hat. Somit kann eine gewisse Zielgruppen-Parallelität zwischen dem Informationsgehalt der ersten Ressource und dem Informationsgehalt der Bannerinformation erreicht werden.

Die Abhängigkeit der Bannerinformation von dem Informationsgehalt der ersten Ressource kann automatisch durch eine Suchmaschine erfolgen. Die Suchmaschine wertet dabei den Informationsgehalt der ersten Ressource aus und legt eine entsprechende Kategorieinformation in der weiteren Ressource an.

Die Abhängigkeit der Bannerinformation von dem Informationsgehalt der ersten Ressource kann auch manuell über das Datennetz von den ersten Ressourcen aus festlegbar und/oder modifizierbar sein.

Gemäß einem weiteren Aspekt der vorliegenden Erfindung ist ein Computersoftwareprogramm-Produkt vorgesehen, das ein derartiges Verfahren implementiert, wenn es auf einem Computer in einer Datennetzumgebung läuft.

Gemäß einem noch weiteren Aspekt der vorliegenden Erfindung ist ein System zur Anzeige von Bannerinformation auf einem an ein Datennetz angeschlossenen Computer vorgesehen. Das System weist eine erste Ressource des Datennetzes auf, die von dem Computer aus angewählt werden kann, um Informationen von der ersten Ressource zu dem Computer über das Datennetz herunterzuladen. Informationen enthalten dabei einen Verweis auf die Adresse einer weiteren Ressource des Datennetzes. Das System weist weiterhin eine weitere Ressource auf, die derart ausgelegt ist, dass zu ihr eine Verbindung von dem Computer aus aufbaubar und Bannerinformation von der weiteren Ressource zu dem Computer über das Datennetz zur Anzeige an dem Computer herunterladbar ist. Dabei weist die weitere Ressource eine Schnittstelle auf, um zum Herunterladen bereitgestellte Bannerinformation wenigstens teilweise ständig oder in im wesentlichen gleichmäßigen zeitlichen Abständen aktualisiert einzupflegen.

Gemäß einem noch weiteren Aspekt der vorliegenden Erfindung ist eine Bannerinformations-Datenbank vorgesehen, die Bannerinformation zum Herunterladen durch an ein Datennetzes angeschlossene Computer bereitstellt.

Weitere Merkmale, Vorteile und Eigenschaften der vorliegenden Erfindung werden nunmehr anhand der detaillierten Erläuterungen eines Ausführungsbeispiels unter Bezugnahme auf die Figuren der begleitenden Zeichnungen näher ersichtlich.
Figur 1 zeigt eine schematische Ansicht der Implementierung der erfindungsgemäßen Technologie, und
Figur 2 zeigt genauer den Aufbaus eines Informationsbanner-Datenbanksystems gemäß der vorliegenden Erfindung.

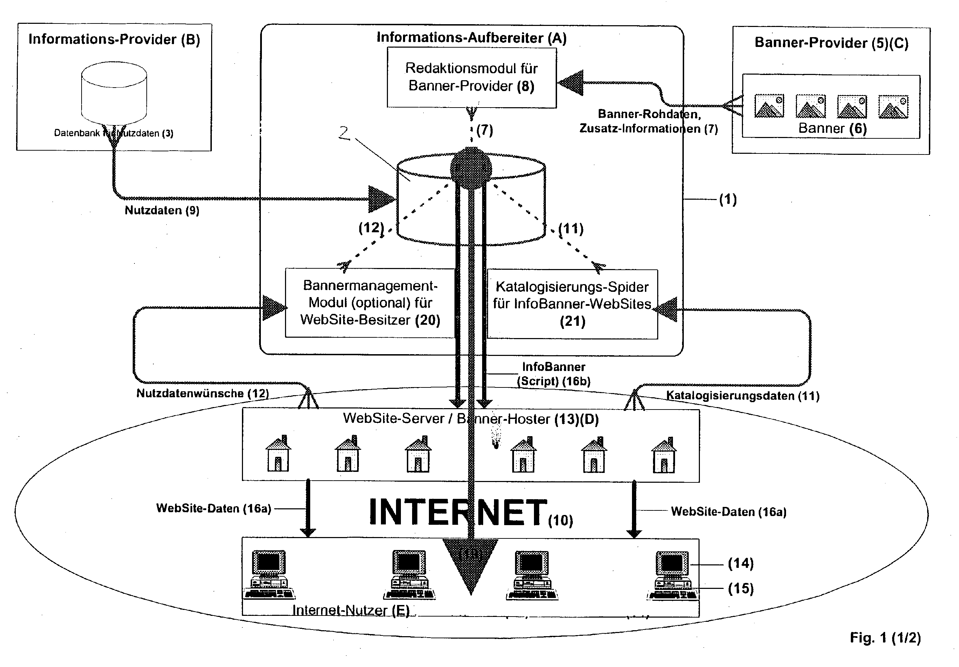

Figur 1 zeigt in einer schematischen Ansicht ein System gemäß der vorliegenden Erfindung. Zentrales Element diese Systems ist ein Bannerinformations-Datenbanksystem 1, das eine Bannerinformations-Datenbank 2, eine Schnittstelle in Form eines Redaktionsmoduls 8 für Banner-Provider, eine weitere Schnittstelle in Form eines Banner-Managementmoduls 20 für Website-Besitzer sowie eine Suchmaschine in Form eines sogenannten Katalogisierungs-Spiders 21 für Websites mit bestimmter Bannerinformation aufweist. Zweck des Bannerinformations-Datenbanksystems 1 ist es, für Websites 13 im Internet 10 Bannerinformationsdaten bereitzustellen, die aus Daten der genannten verschiedenen Datenbankstrukturen zusammengesetzt werden können. Die Websites 13 und das Internet 10 stehen dabei allgemein als Beispiel für Ressourcen in einem verbindungslosen Datennetz.

Der Katalogisierungs-Spider 21 ist ein "intelligenter" Agent (auch Robot genannt), der dazu programmiert ist, eigenständig Websites 13 zu durchforsten, die eine Bannerinformation von der Bannerinformations-Datenbank 2 geschaltet haben, und die gefundenen Daten in der Bannerinformations-Datenbank 2 zu organisieren.

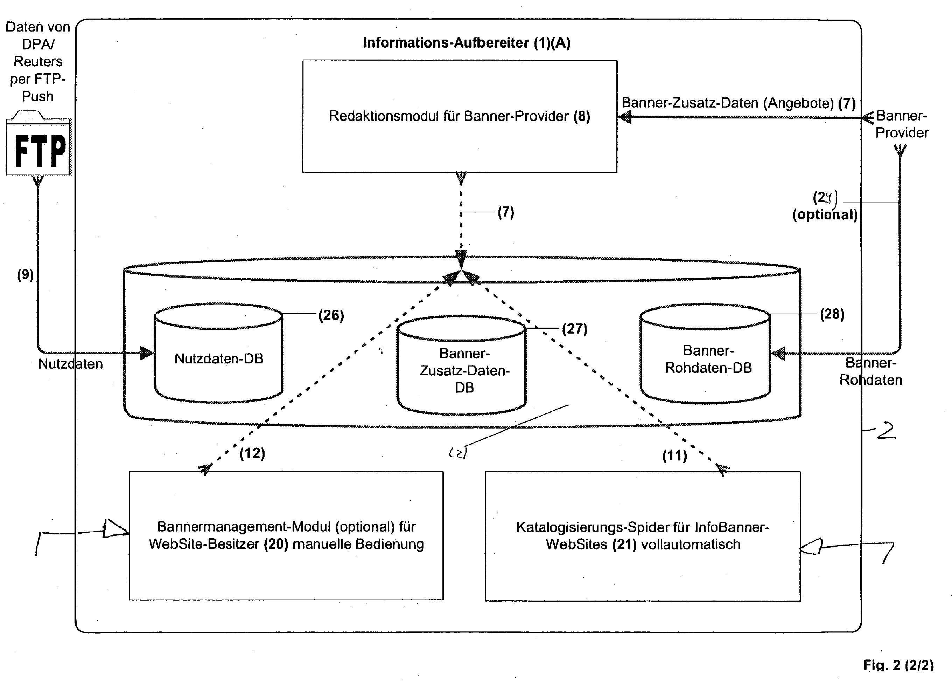

An dem Prozess der Einpflege von Daten in die zentrale Bannerinformations-Datenbank 2 können die folgenden Instanzen teilnehmen:
Ein Informations-Provider B, wie beispielsweise ein Nachrichtendienst, hat eine Datenbank 3 mit Nutzdaten, die in eine Nutzdatenbank 26 überführt werden können, die Teil der zentralen Bannerinformations-Datenbank 2 ist. Der Informations-Provider B ist dabei für die Aktualität seiner mittels der Datenbank 3 bereitgestellten Nutzdaten zuständig. Diese ständig aktualisierten Nutzdaten werden dann in den Nutzdatenbereich (Nutzdatenbank 26 in Figur 2) kopiert. Die dafür zuständige Akualisierungsschnittstelle 9 ist nur durch den Informations-Aufbereiter A ansprechbar. Andere Teilnehmer des Internets haben auf diese Schnittstelle 9 keinen Zugriff.

Ein Banner-Provider 5 stellt Banner-Rohdaten sowie Zusatzinformationen 7 bereit. Die Banner-Rohdaten sind beispielsweise Banner-Grafikobjekte 6. Die Banner-Rohdaten wie auch die Zusatzinformationen 7 können beispielsweise mittels eines Redaktionsmoduls 8 oder optional direkt (siehe Figur 2) in die zentrale Bannerinformations-Datenbank 2 und genauer gesagt in die Banner-Rohdatenbank 28 eingepflegt werden. Das Redaktionsmodul 8 stellt dabei der Informations-Aufbereiter A bereit, der der Betreiber des Servers ist, auf dem das Bannerinformations-Datenbanksystem 1 implementiert ist.

Banner-Provider 5 können indessen Zusatzdaten, wie beispielsweise tagesaktuelle Angebote 7, mittels des Redaktionsmoduls 8 in eine Banner-Zusatzdatenbank 27 (siehe Figur 2) einpflegen.

Nunmehr soll der Ablauf der Aktualisierung des Inhalts der zentralen Informationsbanner-Datenbank 2 erläutert werden.

Mittels der Internet-Aktualisierungsschnittstelle 9 werden Info-/Newspakete von dem Informations-Provider B beispielsweise mittels eines automatischen FTP (File Transfer Protocol)-Pushverfahrens zu der zentralen Informations-Datenbank 2 hin übertragen. Mit Hilfe dieses FTP-Pushverfahrens schickt der Informations-Provider B die gewünschten (abonnierten) Nutzdaten 9 scheinbar selbständig zu der zentralen Informations-Datenbank 2, anstatt darauf zu warten, dass diese die Nutzdaten 9 aktiv abruft. Mittels dieses FTP-Pushverfahrens können somit Nachrichten, Wetterberichte oder andere ausgewählte Informationen aus dem Internet an den "Abonnenten", nämlich die zentrale Informations-Datenbank 2, geschickt werden. Diese Nutzdaten 9 werden in bestimmten Zeitabständen über das World Wide Web aktualisiert.

In der zentralen Informations-Datenbank 2 werden diese ständig aktualisierten Nutzdaten 9 wiederum automatisch mittels Skripten anhand von Kategoriezusätzen in den Nutzdatenbereich 26 der zentralen Informationsbanner-Datenbank 2 eingetragen (ein Skript ist ein Programmcode, der mittels eines Interpreters in Maschinensprache umgewandelt und ausgeführt wird). Somit stehen sie in dem System systematisch aufbereitet zur Verfügung.

Wenn nunmehr ein Website-Server/Banner-Hoster 13 ein Informationsbanner auf seiner Website installieren möchte, kann dies mittels Einbindung 16b eines Skriptes auf der jeweilige Seite (Web Page) der Website erfolgen. Wird nunmehr eine derart präparierte Website von einem Internet-Nutzer E über das Internet 10 aufgerufen, wird nicht nur der eigentliche Inhalt 16a dieser Website zu dem Computer 15 des Internet-Nutzers E geladen, sondern auch das ebenfalls aufgerufene Skript, das wiederum das Laden 19 des jeweiligen Informationsbanners von der zentralen Informationsbanner-Datenbank 2 zu dem Computer 15 des Internet-Nutzers E veranlasst. Das Skript ist also derart programmiert, dass es automatisch eine vorgewählte Internet-Adresse, nämlich die der zentralen Informationsbanner-Datenbank 2, und das darauf folgende Herunterladen bestimmter Bannerinformationen von der zentralen Informationsbanner-Datenbank 2 zu dem Computer 15 des Internet-Nutzers E veranlasst.

Wenn die Anforderung des Skripts an die zentrale Informationsbanner-Datenbank 2 gesandt wird, beginnt dort ein Prozess der Generierung des Banners, das schlussendlich auf den Bildschirm 14 des Internet-Nutzers 15 angezeigt wird. Bei diesem Prozess erfolgt eine Zusammenstellung von Informationen aus den ursprünglichen Banner-Rohdaten 7, eventuell über das Redaktionsmodul 8 für Banner eingepflegte Zusatzinformationen 7, und den Nutzdaten aus der Nutzdatenbank 26.

Ein Banner kann manuell durch einen erneuten Aufruf der jeweiligen Website durch den Internet-Nutzer oder aber automatisch aktualisiert werden, beispielsweise durch eine Schleife des Skriptes, das sich der Banner-Hoster 13 auf dieser Seite eingebunden hat. Somit sind auch bei einem nur einmaligem Aufruf der Website durch den Internet-Nutzer E sich selbst aktualisierende Nutzdaten 9 verfügbar, da diese Nutzdaten 9 laufend aktualisiert von der zentralen Informationsbanner-Datenbank 2 zu dem Computer 15 des Internet-Nutzers E nachgeladen werden und dort gegebenenfalls zusammen mit statischem Inhalt als Bannerbestandteil angezeigt werden.

Im Gegensatz zu der bekannten Banner-Rotationstechnik kann dabei die Dynamisierung der Anzeige durch ständiges Nachladen von aktuellen Nutzdaten und nicht durch die wechselnde Anzeige von zu ein und demselben Zeitpunkt heruntergeladenen Daten erfolgen.

Die schließlich auf dem Bildschirm 14 des Computers 15 des Internet-Nutzers E angezeigten Informationen setzen sich somit einerseits aus Website-Daten 16a, die von den Website-Servern 13 her übertragen werden, sowie andererseits aus den Informationsbanner-Daten 19, die veranlasst durch das entsprechende Skript 16b auf dem Website-Server 13 von der zentralen Informationsbanner-Datenbank 2 zu dem Computer 15 des Internet-Nutzers E hin übertragen werden, zusammen.

Die Betreiber der Website-Server, auf denen die Websites 13 abgelegt sind, können über einen Kanal 12 auf ein Bannermanagement-Modul 20 für Website-Besitzer zugreifen. Dieser Zugriff kann beispielsweise wiederum über das Internet erfolgen, da dieses Bannermanagmeent-Modul 20 eine webbasierte Schnittstelle für die zentrale Informationsbanner-Datembank 2 ist. Dieses Bannermanagement-Modul 20 erlaubt es mittels einer Schnittstelle 18, dass die Betreiber der Website-Server mit den Websites 13 Nutzdatenwünsche 12 bezüglich der später über den Kanal 19 übertragenen Bannerinformation in das Bannerinformations-Datenbanksystem 1 eingeben können.

Weiterhin ist wie bereits erwähnt eine Suchmaschine 21 und genauer gesagt ein Katalogisierungs-Spider für Bannerinformations-Websites 13 dem Bannerinformations-Datenbanksystem 1 zugeordnet. Dieser Katalogisierungs-Spider 21 kann die Adressen derjenigen Websites 13 erfassen und ihren Informationsgehalt auswerten, die Banner von der zentralen Bannerinformations-Datenbank 2 mittels eines Skriptes bei sich eingebunden haben. Die Funktion dieses Katalogisierungs-Spiders 21 wird weiter unten im Detail erläutert.

Die Inhalte eines Werbebanners als Beispiel für Bannerinformation können somit entweder manuell mittels des Redaktionsmoduls 8 oder aber vollautomatisch maschinell aktualisiert, konfiguriert oder getauscht werden. Die verschiedenartigen Nutzinformationen können dann in frei wählbaren Bereichen der Bannerinformation angezeigt werden.

Für die Besitzer von Websites 13 bedeutet die Nutzung eines solchen erfindungsgemäßen Verfahrens, dass ein Mehrwert ihrer Internet-Auftritte (Websites) mit zur Zielgruppe der Auftritte (Websites) passenden Informationen geschaffen wird. Dabei ist ein nur sehr geringer Zeit- und Ressourcenaufwand erforderlich.

Für Unternehmen, die in diesem Datennetz (Internet 10) Werbung betreiben, stellt die erfindungsgemäße Technologie eine neue Möglichkeit dar, Internet-Werbung zu gestalten, da mit Hilfe dieser Technologie die aktualisierte kurzfristige Bereitstellung von neuen Bannerinformationen auf allen im Internet geschalteten Informaionsbannern ermöglicht wird. Somit können beispielsweise tagesaktuelle Angebote (als Beispiel für benutzerbezogene Nutzdaten) in der Banner-Zusatzdatenbank 27 und zeitabhängige Angebote wie beispielsweise Wechselkurse (als Beispiel für allgemeine Nutzdaten) auf der Nutzdatenbank 26 bereitgestellt werden. Zudem ermöglicht es die erfindungsgemäße Technologie im Vergleich zum Einsatz herkömmlicher Internet-Werbebanner wesentlich zielgruppenorientierter zu werben.

Die Grafik-Dateien 6 können als Datenbank-Objekte in einer Datenbankstruktur 5 abgelegt werden. Diese Datenbankstruktur 5 kann beispielsweise mittels des Redaktionsmoduls 8 zugänglich sein, das heißt durch Zugriff auf die Software des Redaktionsmoduls 8 beispielsweise über das Internet kann der Inhalt dieser Datenbankstruktur 5 modifiziert werden. Die Datenbankstruktur 5 kann auf einem relationalem Datenbanksystem, wie beispielsweise MySQL unter Linux, FreeBSD oder BSD-Unix basieren. In der zweiten Datenbankstruktur 3 können Nutzinformationen als Datenbank-Objekte abgelegt werden. Dabei kann es sich um allgemein interessante Nutzdaten wie beispielsweise Währungswechselkurse oder auch Nachrichten handeln, die also nicht weiter bezüglich potentieller Nutzer spezifiziert sind. Auch diese Datenbankstruktur 3 ist beispielsweise über die Aktualisierungsschnittstelle 18 über das Internet zugänglich. Es kann dasselbe Datenbanksystem, wie für die Datenbankstruktur 5 erläutert, verwendet werden.

Die Pflege der Datenbank-Objekte wird durch Skripts gesteuert, die beispielsweise in einer serverbasierten Skriptsprache wie PHP erstellt wurden. Die manuelle Indizierung neuer Banner-Grafiken 6 mittels des Redaktionsmoduls 8 oder von Banner-Nutzinformationen der Datenbank 3 kann quasi in Echtzeit via eines im Internet erreichbaren Redaktionssystems erfolgen. Mittels Einsatz von weiteren automatisiert ablaufenden Skripten werden die in der Datenbank 2 als Objekte vorhandenen Nutzinformationen einem bestimmten grafischen Schema folgend mit den grafischen Datenbank-Objekten 5 verbunden.

Die Erfindung ermöglicht somit das Einblenden dynamischer und auf Wunsch konfigurierbare Informationen auf herkömmlichen Internet-Werbebannern.

Im folgenden soll nunmehr die Funktion des Katalogisierungs-Spiders 24 erläutert werden. Beim Abruf eines Informationsbanners von der Bannerinformations-Datenbankstruktur 1 mittels des Banner-Managementmoduls 20 wird im Gegenzug über einen Kanal 11 dem Datenbank-Server, auf dem die Banner-Informations-Datenbankstruktur 1 abgelegt ist, die Netzwerkadresse (beispielsweise URL im Internet) derjenigen Websites 13 übermittelt, auf der der entsprechende Informationsbanner eingebunden werden soll. Der Katalogisierungs-Spider 21 greift dann auf die Datensätze der übermittelten Adressen (URLs) zu und liest dort beispielsweise die sogenannten Meta-Tags der Seiten aus. Meta-Tags sind Begriffe, auf die Suchmaschinen allgemein zugreifen, wenn sie Suchkataloge erstellen. (Suchmaschinen sind üblicherweise abfragebasierte Systeme zur Strukturierung von Informationen durch Einsortierung bestimmter Schlüsselbegriffe in die Datenbank.)

Nach dem Auslesen dieser Suchworte (Meta-Tags) erfolgt auf der Seite des Datenbankservers, auf dem die Informationsbanner-Daten von Struktur 1 abgelegt sind, eine Grobzuordnung der Adresse (URL) der Website 13 innerhalb der Datenbank, um sie somit Themengebieten zuzuordnen. Anschließend beginnt ein sogenannter Rating-Prozess, mittels dessen Hilfe die Gewichtung der Website 13 in Hinsicht auf diese Begriffe durchgeführt wird. Dabei analysiert der Katalogisierungs-Spider 21 beispielsweise, wie oft bestimmte, in den Meta-Tags vorhandene Begriffe im Text-Körper der jeweiligen Website 13 vorkommen.

Als Beispiel sei angeführt, dass viele Online-Reisebüros Worte wie "Flug, Flüge, Buchen, Reisen, etc." in ihrem Meta-Tags vorliegend haben. Der Katalogisierungs-Spider 21 setzt nunmehr diese Meta-Tags mit dem eigentlichen Informationsgehalt der Website 13 ins Verhältnis. Dadurch kann eine exakte Katalogisierung vorgenommen werden.

Abhängig von dem Ergebnis der Katalogisierung durch den Katalogisierungs-Spider 21 wird dann automatisch eine zu der Katalogisierung passende Art von Nutzdaten aus der Datenbankstruktur 3 ausgewählt und für die entsprechend katalogisierte Website 13 zur Verfügung gestellt. Mit anderen Worten, die Art der auf einer Bannerinformation angezeigten (allgemeinen) Nutzdaten von der Datenbankstruktur 3 hängt von dem übrigen Informationsgehalt der entsprechenden Website 13 ab. Wenn beispielsweise die Kategorisierung durch den Katalogisierungs-Spider 21 ergeben hat, dass es sich, nach der entsprechende Analysierung der Website 13, um ein Frankreich-Reisebüro handeln könnte, kann auf der Bannerinformation als allgemeine Nutzdaten beispielsweise der Wechselkurs des französischen Francs angezeigt werden. Wenn die Auswertung über den Katalogisierungs-Spider 21 dagegen ergeben hat, dass es sich wohl um ein USA-Reisebüro handelt, werden als Nutzdaten auf der Bannerinformation beispielsweise der Dollar-Wechselkurs angezeigt.

Die automatisiert durch den Katalogisierungs-Spider 21 ausgeführte Katalogisierung kann indessen durch das Banner-Managementmodul 20 vom Betreiber der entsprechenden Website 13 noch manuell präzisiert werden, um eine exakte Katalogisierung der Website 13 innerhalb der zentralen Bannerinformations-Datenbank 2 zu ermöglichen. Somit kann also auch ein Betreiber einer Website 13 Nutzdaten auswählen, die als Bannerinformationen auf seiner Website 13 zur Verfügung gestellt werden sollen.

Für den Internet-Nutzer E, das heißt den Benutzer eines Terminals 15, bedeutet dies, dass er aufgrund der Verwendung der Informationsbanner-Technologie, wie erfindungsgemäß vorgeschlagen, durch Besitzer von Websites 13 auf diesen Internet-Auftritten, die für bestimmte Zielgruppen von Personen besonders interessant sind, zusätzliche kostenlose Nutzinformationen bekommen. Diese zusätzliche kostenlose Nutzinformation von den Datenbanken 3 ist für dieselbe Zielgruppe von Interesse. Der Nutzer des Terminals 15 spart also die Zeit, die er normalerweise für eine anderweitige Recherche nach diesen Nutzinformationen benötigt hätte. Diese Parallelität von Website-Inhalt und Bannerinformation wird nicht zuletzt durch die gleichlaufende Kategorisierung der Nutzdaten 9 sowie der Informationsinhalte der Websites 13 durch den Katalogisierungs-Spider 21 erreicht. Im Gegensatz zum Stand der Technik kann somit eine zielgruppenindividualisierte Schaltung von Bannerinformation erfolgen.

## Patentansprüche

1. Verfahren zur Anzeige von Bannerinformation auf einem an ein Datennetz (10 angeschlossenen Computer (15),
aufweisend die folgenden Schritte:
- Anwählen einer Adresse einer ersten Ressource (13) des Datennetzes (10) von dem Computer (15) aus,
- Herunterladen (16a) von Informationen von der Ressource (13) zu dem Computer (15) über das Datennetz (10), wobei die Informationen einen Verweis auf die Adresse einer weiteren Ressource (2) des Datennetzes (10) enthalten, so dass automatisch eine Verbindung von dem Computer (15) zu der weiteren Ressource (2) aufgebaut wird und Bannerinformation von der weiteren Ressource (2) zu dem Computer (15) über das Datennetz (10) heruntergeladen und an dem Computer (15) angezeigt wird,
**dadurch gekennzeichnet,**
**dass** die in der weiteren Ressource (2) zum Herunterladen bereitgestellte Bannerinformation dynamische Informationen aufweist, die in der weiteren Ressource (2) ständig oder in im wesentlichen gleichmäßigen zeitlichen Abständen aktualisiert (9) werden.

2. Verfahren nach Anspruch 1,
**dadurch gekennzeichnet,**
**dass** in der weiteren Ressource (2) statische Informationen und im wesentlichen dynamische Informationen zu der Bannerinformation zusammengesetzt werden

3. Verfahren nach Anspruch 1 oder 2,
**dadurch gekennzeichnet,**
**dass** die dynamischen Informationen der Bannerinformation ständig oder in im wesentlichen gleichmäßigen zeitlichen Abständen erneut von der weiteren Ressource (2) zu dem Computer (15) heruntergeladen werden.

4. Verfahren nach einem der vorhergehenden Ansprüche,
**dadurch gekennzeichnet,**
**dass** die dynamischen Informationen in der weiteren Ressource (2) kategorisiert abgelegt werden.

5. Verfahren nach einem der vorhergehenden Ansprüche,
**dadurch gekennzeichnet,**
**dass** in der weiteren Ressource (2) Kategorieinformationen bezüglich des Informationsgehalts derjenigen ersten Ressourcen (13) abgelegt sind, die einen Verweis zum Herunterladen von Bannerinformation von der weiteren Ressource (2) eingebunden haben.

6. Verfahren nach einem der vorhergehenden Ansprüche,
**dadurch gekennzeichnet,**
**dass** in der weiteren Ressource (2) dynamische Informationen verschiedener Kategorien vorgesehen sind und die zu dem Computer (15) übertragene dynamische Information der Bannerinformation (19) von dem Informationsgehalt derjenigen ersten Ressource (13) abhängt, die der Computer (15) ursprünglich angewählt hat.

7. Verfahren nach Anspruch 6,
**dadurch gekennzeichnet,**
**dass** die Festlegung der Abhängigkeit der Bannerinformation (19) von dem Informationsgehalt der ersten Ressource (13) automatisch durch eine Suchmaschine (21) erfolgt, die den Informationsgehalt der ersten Ressource (13) auswertet und eine entsprechende Kategorieinformation in der weiteren Ressource (2) ablegt.

8. Verfahren nach Anspruch 6 oder 7,
**dadurch gekennzeichnet,**
**dass** die Abhängigkeit der Bannerinformation (19) von dem Informationsgehalt der ersten Ressource (13) manuell über das Datennetz von der ersten Ressource (13) aus festgelegt und/oder modifiziert werden kann.

9. Computersoftwareprogramm-Produkt,
**dadurch gekennzeichnet,**
**dass** es ein Verfahren nach einem der vorhergehenden Ansprüche implementiert, wenn es auf einem Computer in einer Datennetzumgebung läuft.

10. System zur Anzeige von Bannerinformation auf einem an ein Datennetz (10) angeschlossenen Computer (15), aufweisend:
- eine ersten Ressource (13) des Datennetzes (10), die von dem Computer (15) aus angewählt werden kann, um Informationen von der ersten Ressource (13) zu dem Computer (15) über das Datennetz (10) herunterzuladen, wobei die Informationen einen Verweis auf die Adresse einer weiteren Ressource (2) des Datennetzes (10) enthalten, und
- eine weitere Ressource (2), die derart ausgelegt ist, dass zu ihr eine Verbindung von dem Computer aus aufbaubar ist und Bannerinformation von der weiteren Ressource (2) zu dem Computer (15) über das Datennetz (10) zur Anzeige auf dem Computer (15) herunterladbar ist
**dadurch gekennzeichnet,**
**dass** die weitere Ressource (2) eine Schnittstelle aufweist, um zum Herunterladen bereitgestellte Bannerinformation wenigstens teilweise ständig oder in im wesentlichen gleichmäßigen zeitlichen Abständen aktualisiert (9) einzupflegen.

11. System nach Anspruch 10,
**dadurch gekennzeichnet,**
**dass** die weitere Ressource (2) dazu programmiert ist, statische Informationen und im wesentlichen dynamische Informationen zu der Bannerinformationen zusammenzusetzen.

12. System nach Anspruch 10 oder 11,
**dadurch gekennzeichnet,**
**dass** die dynamischen Informationen der Bannerinformation ständig oder in im wesentlichen gleichmäßigen zeitlichen Abständen erneut von der weiteren Ressource (2) zu dem Computer (15) herunterladbar sind.

13. System nach einem der Ansprüche 10 to 12,
**dadurch gekennzeichnet,**
**dass** die dynamischen Informationen in der weiteren Ressource (2) kategorisiert abgelegt sind.

14. System nach einem der Ansprüche 10 to 13,
**dadurch gekennzeichnet,**
**dass** in der weiteren Ressource (2) Kategorieinformationen bezüglich des Informationsgehalts derjenigen ersten Ressource (13) abgelegt sind, die einen Verweis zum Herunterladen von Bannerinformation von der weiteren Ressource (2) eingebunden hat.

15. System nach einem der Ansprüche 10 bis 14,
**dadurch gekennzeichnet,**
**dass** in der weiteren Ressource (2) dynamische Informationen verschiedener Kategorien vorgesehen sind und die zu dem Computer (15) übertragene dynamische Information der Bannerinformation (19) von dem Informationsgehalt derjenigen ersten Ressource (13) abhängt, die der Computer (15) ursprünglich angewählt hat.

16. System nach Anspruch 15,
**dadurch gekennzeichnet,**
**dass** es weiterhin eine Suchmaschine (21) aufweist, die die Abhängigkeit der Bannerinformation (19) von dem Informationsgehalt der ersten Ressource (13) automatisch festlegt, indem sie die den Informationsgehalt der ersten Ressource (13) auswertet und eine entsprechende Kategorieinformation in der weiteren Ressource (2) ablegt.

17. System nach Anspruch 15 oder 16,
**dadurch gekennzeichnet,**
**dass** die weitere Ressource (2) eine Schnittstelle (20) aufweist, mittels der die Abhängigkeit der Bannerinformation (19) von dem Informationsgehalt der ersten Ressource (13) manuell über das Datennetz von der ersten Ressource (13) aus festgelegt und/oder modifiziert werden kann.

18. Bannerinformations-Datenbank, die Bannerinformation zum Herunterladen durch an ein Datennetz (10) angeschlossene Computer (15) bereitstellt,
**dadurch gekennzeichnet,**
**dass** sie eine Schnittstelle aufweist, mittels der zur Aktualisierung der Bannerinformation laufend Nutzdaten (9) automatisch eingepflegt werden.

19. Bannerinformations-Datenbank nach Anspruch 18,
**dadurch gekennzeichnet,**
**dass** die Bannerinformation in Kategorien strukturiert abgelegt sind.

20. Bannerinformations-Datenbank,
**dadurch gekennzeichnet,**
**dass** sie weiterhin Informationen bezüglich derjenigen Websites enthält, die ein Banner der Bannerinformations-Datenbank eingebunden haben.
